Europäisches Patentamt

European Patent Office

Office européen des brevets

(19)

(11) Numéro de publication: **0 014 656**
**B1**

(12) **FASCICULE DE BREVET EUROPEEN**

(45) Date de publication du fascicule du brevet: **22.12.82**

(51) Int. Cl.³: **G 01 P 15/09**

(21) Numéro de dépôt: **80400173.3**

(22) Date de dépôt: **04.02.80**

(54) **Accéléromètre piézo-électrique.**

(30) Priorité: **09.02.79 FR 7903372**

(43) Date de publication de la demande:
**20.08.80 Bulletin 80/17**

(45) Mention de la délivrance du brevet:
**22.12.82 Bulletin 82/51**

(84) Etats contractants désignés:
**DE GB**

(56) Documents cités:
**FR - A - 1 229 103**
**US - A - 3 229 128**
**US - A - 3 307 054**
**US - A - 3 320 580**
**US - A - 3 487 238**
**US - A - 3 612 921**
**US - A - 3 727 084**

(73) Titulaire: **Cartier, Jean**
**1, rue de Midori**
**F-78350 Les Loges en Josas (FR)**

(72) Inventeur: **Cartier, Jean**
**1, rue de Midori**
**F-78350 Les Loges en Josas (FR)**

(74) Mandataire: **Hasenrader, Hubert et al,**
**Cabinet BEAU DE LOMENIE 55, rue d'Amsterdam**
**F-75008 Paris (FR)**

Courier Press, Leamington Spa, England.

Accéléromètre piézoélectrique

La présente invention concerne un dispositif accéléromètre du type masse-ressort comprenant dans un boîtier une masse évidée vibrante équilibrée statiquement et dynamiquement, un ressort constitué par au moins un élément piézoélectrique creux interposé entre la masse et le boîtier ainsi qu'un élément de fixation monté dans le boîtier, traversant l'élément piézoélectrique creux et prenant appui sur un épaulement de l'évidement de la masse vibrante. Un tel dispositif est connu du brevet français FR—A—1 582 132.

Les dispositifs accéléromètres du type connu sont de plus en plus utilisés pour détecter ou mesurer les vibrations ou chocs auxquels sont soumises certaines pièces par exemple de l'industrie aéronautique, automobile, serrurière etc . . . .

Dans ces dispositifs accéléromètres du type masse-ressort, l'élément actif piézoélectrique, par exemple réalisé en céramique, assure la conversion force-tension électrique.

Le boîtier du dispositif accéléromètre comprend un organe de fixation à l'aide duquel l'ensemble du dispositif est rendu solidaire de la structure dont les vibrations ou chocs sont à mesurer.

La théorie démontre que pour un système masse-ressort donné, il existe une pulsation ou vibration propre et qu'en fonction de la pulsation du mouvement vibratoire auquel est soumis ledit système, on obtient un signal de sortie proportionnel soit à l'accélération qui s'exerce sur la masse vibrante de mesure, soit à la position relative de celle-ci par rapport au boîtier support. Dans ce dernier cas, la tension électrique de sortie indique directement la position de la masse vibrante par rapport au boîtier support.

Cependant, dans certains cas, il s'avère nécessaire d'éliminer du signal de sortie des signaux parasites dus à la présence de diverses grandeurs d'influence parmi lesquelles les plus importantes sont l'erreur transversale, et les conditions d'environnement : température, chocs thermiques, bruits acoustiques . . . . .

La sensibilité d'un tel dispositif accéléromètre dépend donc du choix fait pour la taille de la masse vibrante de mesure, la raideur du ressort (élément piézoélectrique) et du coefficient de conversion force tension électrique des céramiques utilisées pour la confection du ressort piézoélectrique. De ce choix, il résulte alors une fréquence de vibration propre au système, une gamme de tensions électriques pour les signaux de sortie et une gamme d'accélération susceptible d'être mesurée par le dispositif accéléromètre.

Les dispositifs accéléromètres devraient être capables de mesurer avec précision soit le niveau de la vibration à laquelle ils sont soumis, et ceci le long d'un axe de sensibilité particulier choisi comme direction de mesure, soit la projection du niveau du mouvement vibratoire sur cet axe. La connaissance précise de cet axe de sensibilité oblige à concevoir le système masse vibrante de mesure-ressort piézoélectrique avec un seul degré de liberté, ce qui implique pour la masse vibrante un très bon guidage et sa fixation très ferme au boîtier support du dispositif accéléromètre.

Le guidage précis de la masse vibrante nécessite un usinage de pièces de guidage avec une tolérance très stricte. De plus, une contrainte trop importante appliquée sur l'élément piézoélectrique par l'intermédiaire de la masse vibrante pour assurer la fixation très ferme de celle-ci, risque de provoquer une dépolarisation du ressort piézoélectrique. Cette contrainte apparaît notamment lorsque le dispositif accéléromètre est soumis à des variations de température qui entraînent à leur tour des variations de dilatation des différents éléments dudit dispositif et qui, vu le module d'élasticité du moyen de fixation de la masse vibrante, introduisent des variations de force auxquelles est soumis le ressort piézoélectrique.

Si la fréquence à laquelle se produisent ces variations de température est comprise dans la gamme des vibrations auxquelles est soumis le dispositif accéléromètre, les variations d'effort sont converties en un signal parasite qui perturbe le signal utile mesuré.

La présente invention a pour but de réaliser un dispositif accéléromètre du type initialement mentionné dans lequel les inconvénients précités n'existent plus ou sont tout au moins fortement atténués et qui permettent d'obtenir des résultats de mesure exacts.

Dans le cadre du dispositif accéléromètre du type précité, ce but est atteint conformément à l'invention du fait que ledit dispositif comporte, en outre, un élément de précontrainte élastique disposé dans l'évidement de la masse vibrante entre l'épaulement de ladite masse et l'élément de fixation, et que le positionnement de l'élément de précontrainte par rapport à au moins ladite masse est tel que le point d'application de la force de précontrainte et le centre de gravité déterminé par l'équilibrage statique et dynamique de ladite masse vibrante sont situés dans un même plan médian au ressort piézoélectrique, transversal, perpendiculaire à l'axe du boîtier.

Grâce à cette conception, la masse vibrante est guidée correctement et les variations de la force de précontrainte sont réduites à un minimum.

Certes, il a été déjà proposé par l'auteur de la présente invention (voir brevet français FR-A-1.229.103) d'utiliser un ressort annulaire qui est situé au niveau du centre de gravité de la masse vibrante est s'appuie également sur les moyens de fixation. Cependant, dans ce cas connu, la masse vibrante est pleine et les moyens de fixation s'appuient non seulement sur le boîtier support, mais également sur le capot du boîtier ce qui entraîne une augmentation de la sensibilité aux bruits acoustiques dans lesquels baigne le dispositif accéléromètre et ajoute, par effet microphonique, des signaux parasites indésirables. Pour limiter la sensibilité aux bruits acoustiques, on a été amené à prévoir des boîtiers rigides, solution qui conduit à des poids et des volumes importants du dispositif. En outre, le système connu ne permet pas de faire coïncider les centres de gravité de la masse vibrante et du ressort piézoélectrique.

En vue de l'obtention d'un dispositif accéléromètre très compact, il est avantageux que les éléments du ressort piézoélectrique creux soient de forme cylindrique et entourent une partie de la masse vibrante évidée et que la disposition mutuelle de la masse vibrante et des éléments du ressort piézoélectrique soit telle que leurs centres de gravité sont dans un même plan médian au ressort piézoélectrique, transversal, perpendiculaire à l'axe du boîtier et, de préférence, coïncident avec le centre de gravité de la masse vibrante équilibrée. Dans certains cas particuliers, il est avantageux que les éléments du ressort piézoélectrique creux cylindrique soient entourés au moins partiellement, à la manière d'une jupe, par une partie de la masse vibrante évidée, la disposition mutuelle de la masse vibrante et des éléments du ressort piézoélectrique étant telle que leurs centres de gravités soient dans un même plan médian au ressort piézoélectrique, transversal, perpendiculaire à l'axe du boîtier et, de préférence, coïncident avec le centre de gravité de la masse vibrante équilibrée.

Pour faciliter le contact entre la masse vibrante évidée et la partie supérieure des éléments piézoélectriques creux, la masse vibrante comprend, du côté éloigné du boîtier mais tourné vers ce dernier, un épaulement externe, ou interne, qui sert de face d'appui sur un élément piézoélectrique appliqué de l'autre côté sur ledit boîtier. En vue de rapprocher le plus possible ou de faire coïncider les centres de gravité de la masse vibrante et du ressort piézoélectrique, il est avantageux que l'une des extrémités de la masse vibrante soit logée dans un évidement du boîtier, évidement situé endessous de l'extrémité inférieure des éléments piézoélectriques cylindriques. Cet évidement peut être de forme annulaire et se trouver soit à l'extérieur, soit à l'intérieur de la projection axiale des éléments piézoélectriques.

En vue d'assurer un alignement exact des éléments piézoélectriques sur l'axe de sensibilité coïncidant avec celui du moyen de fixation et en vue d'assurer un guidage précis de la masse vibrante le long de cet axe, il est avantageux que l'une des extrémités d'un élément piézoélectrique prenne appui sur le boîtier par l'intermédiaire d'une calotte sphérique qui est évidée pour le passage de l'élément de fixation et, le cas échéant, d'une partie de la masse vibrante, et qui présente une surface sphérique dont le centre est situé sur l'axe commun du boîtier et de l'élément de fixation et qui repose sur une cavité sphérique de boîtier cavité sphérique dont le diamètre est identique à celui de ladite calotte sphérique.

Dans ce même contexte, il est opportun que l'élément de précontrainte comporte au moins une extrémité conformée en cavité, ou calotte, sphérique qui coopère avec une calotte, ou cavité, sphérique de même forme et ménagée sur la face d'appui soit de l'épaulement interne de la masse vibrante, soit sur l'épaulement externe de l'élément de fixation, les centres de courbure de ces calotte et cavité sphériques étant situés sur l'axe commun du boîtier et de l'élément de fixation.

L'élément de précontrainte est constitué par au moins une rondelle tronconique élastique.

Pour faciliter la fixation de la masse vibrante sur le boîtier support, il est avantageux que l'élément de fixation soit constitué par un écrou et une tige filetée qui est soit solidaire du boîtier par vissage, soit réalisée d'une seule pièce avec ledit boîtier. Afin de réduire au maximum l'influence néfaste des variations thermiques, l'élément de fixation comprend une partie médiane d'une section transversale inférieure à celle des extrémités et d'une hauteur suffisante pour que sa résistance thermique soit égale à, ou peu différente de, celle de l'ensemble comprenant la masse vibrante et le ou les éléments piézoélectrique (s) et les matières constituant l'élément de précontrainte et l'élément de fixation ont des coefficients de dilatation qui sont adaptés à ceux du système masse-ressort de façon à obtenir une dilatation différentielle minimale.

Selon un autre mode de fonctionnement, les vibrations que l'on veut mesure, au lieu de soumettre l'élément piézoélectrique à des efforts de compression entre la masse vibrante et le boîtier support, se traduisent par des efforts de cisaillement au niveau de l'élément piézoélectrique. Pour ce faire, l'épaulement externe ou interne de la masse vibrante comporte une face d'appui partielle pour une extrémité de l'élément piézoélectrique et le boîtier comporte une face d'appui partielle pour l'autre extrémité dudit élément piézoélectrique, les deux faces d'appui partielles étant décalées l'une par rapport à l'autre de telle sorte que la masse vibrante constitue soit l'appui interne, soit l'appui externe, et le boîtier constitue respectivement l'appui externe, ou interne, pour ledit élément piézoélectrique. On doit alors adapter la position des électrodes à ce nouveau mode de fonctionnement, c'est pourquoi elles se trouvent dans le cas présent l'une sur la surface périphérique externe radialement, l'autre sur la surface périphérique interne radialement de l'élément piézoélectrique.

Pour faire fonctionner le dispositif

accéléromètre de façon à mesurer les vibrations selon un mode de cisaillement, un autre mode de réalisation dudit dispositif accéléromètre est caractérisé en ce qu'il comprend deux masses vibrantes présentant chacune la forme d'un segment cylindrique dont la face plane est parallèle 6 l'axe du boîtier, que ledit boîtier comprend une partie saillante médiane, dite poutre, présentant deux faces parallèles d'appui pour la face plane de la masse vibrante correspondante, qu'un élément piézoélectrique en forme de plaque évidée est enserré entre la face d'appui de la poutre et la face d'appui d'une des deux masses vibrantes, que l'épaulement interne de la masse est fraisé de façon que l'on ait toujours le centre de gravité de la masse et le point d'application de la force de précontrainte dans le même plan médian au ressort piézoélectrique, transversal, perpendiculaire à l'axe du boîtier, et que les deux faces parallèles d'appui sont usinées sur la poutre de sorte que l'on ait toujours le centre de gravité de l'élément piézoélectrique et le point d'application de la force de précontrainte dans le même plan, de préférence confondus, que la poutre comporte un alésage perpendiculaire à l'axe et aux faces parallèles d'appui dudit boîtier et que chaque élément piézoélectrique est enserré à l'aide de l'élément de fixation entre la face plane d'une masse vibrante et une des faces d'appui de la poutre.

Dans la cas de ce mode de réalisation dudit dispositif accéléromètre, on prévoit en outre que l'extrémité supérieure de la face plane de chaque masse vibrante est surmontée d'un épaulement d'appui tourné vers la masse vibrante correspondante, que la largeur transversale de ces épaulements d'appui est inférieure, ou au plus égale, à la moitié de l'épaulement de l'élément piézoélectrique en forme de plaque et que l'un des bords dudit élément piézoélectrique porte contre l'épaulement d'appui de la masse vibrante et l'autre bord opposé porte contre l'épaulement d'appui de la poutre.

Il est également avantageux que l'alésage de la poutre soit garni d'un tube d'isolement électrique et thermique qui traverse aussi avec jeu l'évidement de l'élément piézoélectrique et pénètre partiellement dans l'évidement de la masse vibrante. Le tube d'isolement peut être aussi constitué par deux vis qui se vissent dans une partie dudit tube et qui, par leurs têtes, agissent sur l'élément de précontrainte élastique en direction de la poutre du boîtier.

La présente invention sera décrite en détail à l'aide de plusieurs modes de réalisation se référant aux dessins annexés sur lesquels:

—la figure 1 est une vue en coupe du dispositif selon un mode de réalisation représenté au complet, monté sur un organe,

—la figure 2 est une vue en coupe en détail de l'ensemble selon un autre mode de réalisation;

—la figure 3 est une vue en coupe en détail de l'ensemble selon un autre mode de réalisation;

—la figure 4 est une vue en coupe et en détail de l'ensemble selon un autre mode de réalisation;

—la figure 5 est une demi-vue en demi-coupe d'un mode de réalisation avec deux masses vibrantes; et

—la figure 6 est une vue en coupe en détail selon un autre mode de réalisation avec deux masses vibrantes.

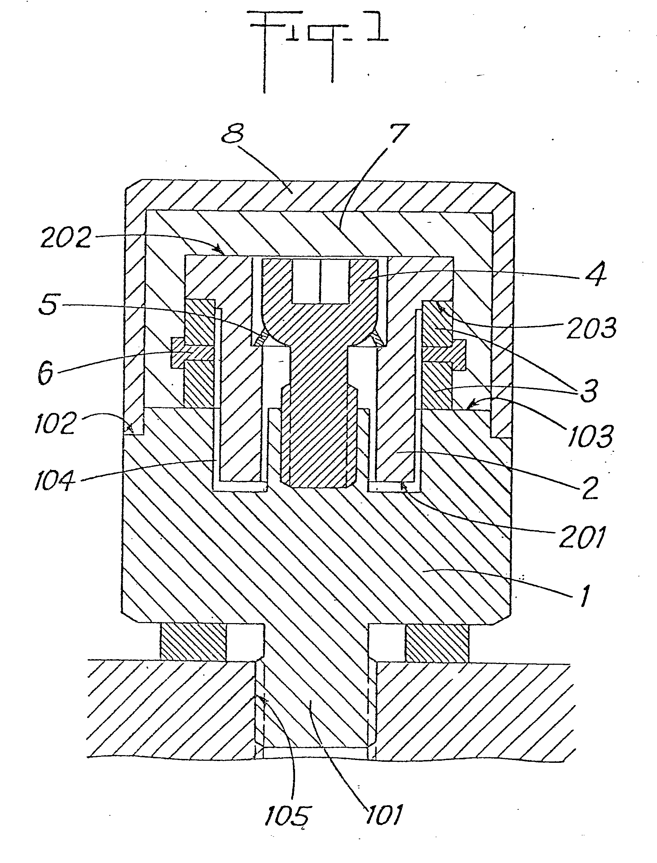

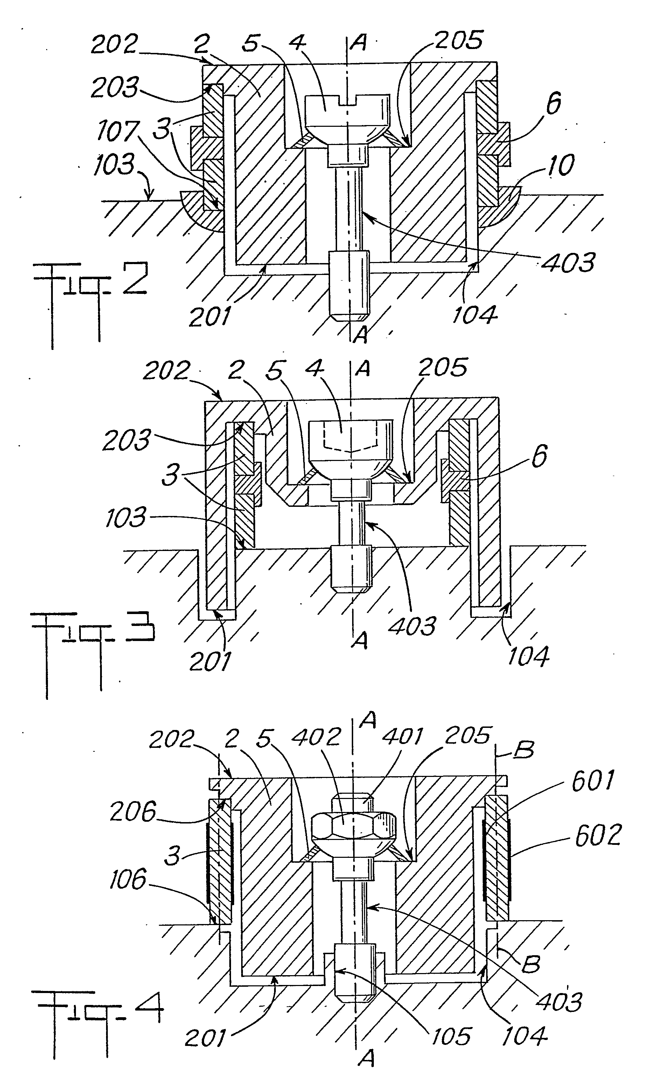

Selon les modes de réalisation représentés sur les figures 1 et 2, à titre descriptif et non limitatif de l'invention, on a le boîtier support 1 dans lequel s'engage partiellement la masse vibrante 2. L'élément piézoélectrique 3 creux cylindrique entoure la masse vibrante 2 et est serré entre celle-ci et le boîtier support 1. L'élément de fixation 4 permet de rendre solidaire l'ensemble. L'élément de précontrainte 5 est situé entre l'élément de fixation 4 et la masse vibrante 2. L'élément piézoélectrique 3 est aussi muni d'une électrode centrale 6. Le dispositif est rempli d'une substance 7 de la famille des silicones. Un capot 8 coiffe de façon étanche l'ensemble.

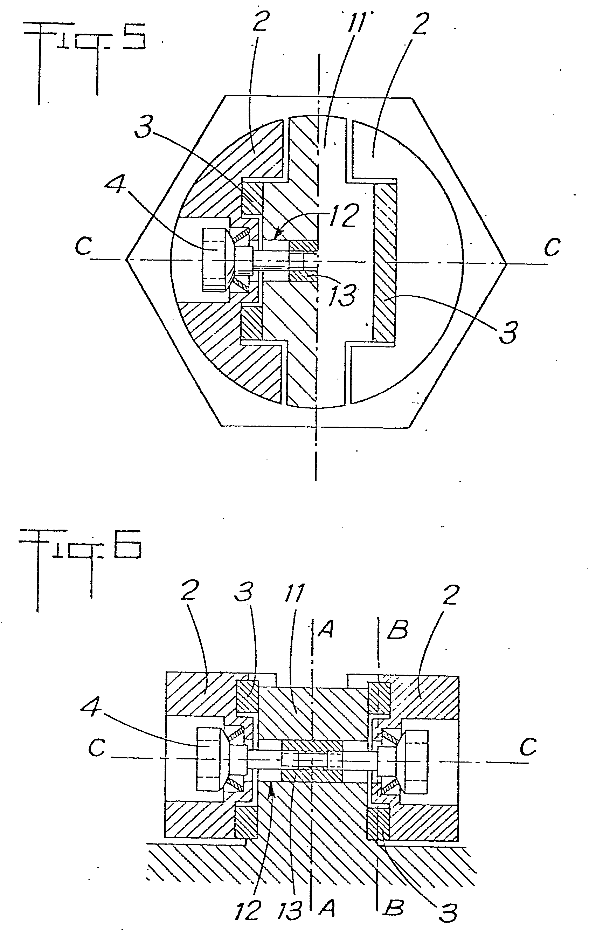

Dans le mode de réalisation illustré par la figure 3, l'élément piézoélectrique 3 creux et cylindrique est à l'intérieur de la masse vibrante 2 de façon à être entouré ou moins partiellement à la manière d'une jupe, par celle-ci.

Dans tous les cas, le centre de gravité de la masse vibrante 2 et celui de l'élément piézoélectrique 3 sont toujours dans le même plan médian au ressort piézoélectrique, transversal, perpendiculaire à l'axe du boîtier et de préférence coïncident.

Le boîtier support 1 se présente extérieurement comme un prisme droit de section droite hexagonale avec à sa face inférieure un téton fileté 101 afin de faciliter son montage sur l'organe à étudier au moyen d'une clé. A sa partie supérieure, un épaulement concentrique, circulaire, périphérique 102 recevra ultérieurement le capot 8. L'élément piézoélectrique 3 s'appuie soit directement, soit indirectement sur la face supérieure 103 du boîtier support 1 avec éventuellement interposition d'une articulation décrite plus loin.

La masse vibrante 2 s'enfonce partiellement dans le boîtier support 1. Pour ce faire, une gorge annulaire, concentrique et de section rectangulaire 104 est aménagée dans la face supérieure du boîtier support 1. La profondeur de la gorge 104 est telle que le centre de gravité de la masse vibrante 2 et celui de l'élément piézoélectrique 3 soient dans le même plan, et de préférence coïncident. La partie inférieure 201 de la masse vibrante 2 se loge dans la gorge 204 de façon à ne toucher ni le fond, ni les parois latérales.

La masse vibrante 2 est pourvue du côté de sa partie supérieure 202, sous la face la plus éloignée du boîtier support 1, d'un épaulement dont la face d'appui 203 est tournée vers la face supérieure 103 du boîtier support 1, épaulement externe ou interne suivant que l'élément piézoélectrique 3 entoure (figures 1, 2) ou est entouré (figure 3) par la masse vibrante 2. Dans le cas où l'élément piézoélectrique 3 travaille en compression, les faces d'appui doivent être parallèles et s'étendre sur toute la surface de la section droite de l'élément piézoélectrique 3. Pour que ceci soit bien respecté, quelles que soient les conditions d'usinage et la tolérance imposée, on aménage de préférence une articulation de type rotule sphérique (représentée uniquement sur la figure 2) dont le centre est situé sur l'axe commun du boîtier support 1 et de l'élément de fixation 4 entre l'élément piézoélectrique 3 et le boîtier support 1.

Cette articulation est aménagée dans la face supérieure 103 du boîtier support 1, concentriquement à la gorge 104, dans l'angle formé par la face supérieure 103 et la paroi latérale la plus extérieure, ou la plus intérieure, quand l'élément piézoélectrique 3 entoure, ou respectivement est entouré par, la masse vibrante 2. Cette articulation est constituée d'un anneau 10 qui présente une face d'appui plane 107 sur laquelle repose l'élément piézoélectrique 3 et une surface sphérique qui vient s'ajuster et s'articuler sur une surface sphérique complémentaire, de même rayon formée dans le boîtier support 1. Dans ces conditions, l'anneau 10 s'articulant sur le boîtier support 1 le long d'une surface sphérique, l'élément piézoélectrique 3 sera comprimé entre des faces 107 et 203 toujours parallèles. On pourrait sans sortir de l'invention, aménager cette articulation au niveau de la face 203 de l'épaulement de la masse vibrante 2.

L'élément de fixation 4 est, par exemple, une vis. Par l'intermédiaire de l'élément de précontrainte 5, on force la masse vibrante 2 vers le boîtier support 1. Le pied de la vis se visse dans un trou taraudé 105 coaxialement au boîtier support 1. Comme illustré à la figure 4, on peut aussi utiliser une tige filetée 401 et un écrou 402, le pied de la tige est alors ancré dans le boîtier support 1 par soudure, collage ou autre moyen connu dans le trou 105, La tête de la vis de fixation 4, ou l'écrou 402, et l'élément de précontrainte 5 se logent dans un évidement de la masse vibrante 2, percé coaxialement et dans la face supérieure de la masse vibrante 2.

La rayon de giration R de la masse vibrante 2 est défini par la formule suivante:

$$R = \sqrt{\frac{I}{S}}$$

dans laquelle I désigne le moment d'inertie de la section radiale de la masse vibrante par rapport à un axe orthogonal au plan de ladite section et passant par le centre de gravité, et S l'aire de cette dite section radiale.

Le fond 205 de l'évidement est pratiqué à une profondeur telle que le point d'application de la résultante de l'effort de précontrainte exercé par l'élément de précontrainte 5 et le centre de gravité de la masse vibrante 2 équilibrée statiquement et dynamiquement coïncident et que le rayon moyen de l'élément piézoélectrique 3 et le rayon de giration de la masse vibrante 2 soient de préférence égaux.

Afin que l'effort de précontrainte s'exerce parallèlement à l'axe A—A commun au boîtier support 1 et à l'élément de fixation 4 et de préférence soit confondu avec lui, une articulation sphérique de type rotule est aménagée entre la face inférieure de la tête de vis 4, ou de l'écrou 402; et la face supérieure de l'élément précontrainte 5. La face inférieure de la vis de fixation 4 a, par exemple, une forme sphérique convexe dont le centre de courbure se trouve sur un axe de symétrie de la vis et la surface supérieure de l'élément de précontrainte 5 une forme sphérique complémentaire, ou vice-versa.

La face inférieure de l'élément de précontrainte 5 repose sur le fond 205 de l'évidement de la masse vibrante 2. Il est alors défini une seule direction privilégiée, cette direction connue est obtenue avec précision, même si les tolérances d'usinage sont larges; c'est la direction le long de laquelle se fera la mesure du mouvement vibratoire.

On pourrait aussi aménager cette articulation sphérique de type rotule dans le fond 205 de l'évidement de la masse vibrante 2, l'élément de précontrainte 5 s'appuierait alors sur une face inférieure de l'élément de fixation 4 qui serait plane.

Pour atténuer la sensibilité aux phénomènes transitoires thermiques, il faut équilibrer les résistances thermiques et les coefficients de dilatation, car, compte-tenu de la structure hétérogène des empilages: boîtier support 1, élément piézoélectrique 3, masse vibrante 2, d'une part, et boîtier support 1, élément de fixation 4, élément de précontrainte 5, masse vibrante 2 d'autre part, il serait illusoire de chercher à équilibrer les capacités thermiques. Par contre, les résistances thermiques peuvent être augmentées d'une mainère très importante en déposant par un procédé connu, une matière isolante qui a pour effet d'empêcher l'apparition des transitoires et de les rejeter en dehors de la zone utile de mesure. Il existe de nombreux matériaux répondant à ces critères que l'on peut utiliser par projection au générateur de plasma, par soudure, par scellement ou tout autre procédé connu.

Mais dans l'empilage, l'élément de fixation 4 apparaît comme un véritable court-circuit thermique entre le boîtier support 1 et la masse vibrante 2. Pour augmenter sa résistance thermique, on usine un étranglement 403 le long de sa plus grande dimension. Sa section plus faible reste compatible avec les calculs de résistance de matériaux et sa longueur est telle que sa résistance se trouve augmentée.

Pour avoir une dilatation différentielle minime, on peut choisir le matériau de l'élément de

**0 014 656**

fixation 4, vis ou tige filetée, parmi le titane, le tungstène ou des alliages connus.

De plus, l'effort supplémentaire dû à cette dilatation sera plus faible puisque proportionnel à la constante d'élasticité de l'élément de précontrainte 5 qui peut être de 10 à 100 fois plus faible que le module d'élasticité du matériau choisi pour l'élément de fixation 4. Cet élément de précontrainte 5 est, par exemple, une rondelle tronconique élastique déformable, découpée dans un matériau connu de l'homme de l'art puisque couramment employé en mécanique.

Selon le mode de réalisation de la figure 4, les vibrations à mesurer se traduisent au niveau de l'élément piézoélectrique 3 par des efforts de cisaillesment. En effet, la face 203 de l'épaulement de la masse vibrante 2 au lieu de s'étendre sur toute la surface de l'élément piézoélectrique 3 n'est plus en contact que sur une surface 206 au plus égale à la moitié de la surface précédemment en contact. De même, la face 103 du boîtier support 1, ou la face plane de l'anneau 10 assurant l'articulation sphérique de type rotule, n'est plus en contact qu'avec une surface 106 elle aussi au plus égale à la moitié de la surface précédemment en contact avec l'élément piézoélectrique 3.

Les deux surfaces 106 et 206 sont décalées et situées de part et d'autre d'un axe de symétrie B—B partageant l'épaisseur radiale de l'élément piézoélectrique 3 en deux. Ceci est obtenu, par exemple, en décolletant l'épaulement de la masse vibrante 2 sur une faible épaisseur et une largeur permettant de réduire la face 203 dans les proportions précitées. De même, une gorge de faible profondeur, concentrique et à proximité immédiate de la gorge 104 du boîtier support 1, est usinée sur la face 103. On pourrait, de la même façon, soumettre à un effort de cisaillement l'élément piézoélectrique 3 en inversant la position relative, par rapport à l'axe de symétrie B—B qui passe dans l'epaisseur radiale de l'élément piézoélectrique 3, des surfaces en question 106 et 206. On peut aussi usiner sur la face 203 de l'épaulement de la masse vibrante 2 un profil mâle et sur la face 103 du boîtier support 1 le profil correspondant femelle. On doit alors adapter la disposition des électrodes à ce nouveau mode de fonctionnement, c'est pourquoi un film d'argent, ou de nickel ou tout autre métal conducteur est déposé par dépôt sous vide, ou autre procédé connu, sur la surface périphérique radialement interne 601 et sur la surface périphérique radialement externe 602 de l'élément piézoélectrique 3.

Selon le mode de réalisation représenté en demi-vue, demi-coupe radiale sur la figure 5, le dispositif accéléromètre est muni de deux masses vibrantes 2, chacune ayant la forme d'un segment cylindrique dont la face plane est parallèle à l'axe A—A du boîtier support 1. Leur forme générale en C enveloppe partiellement la partie médiane saillante solidaire du boîtier support 1, dite poutre 11, de sorte que l'on ait toujours le centre de gravité de la masse vibrante 2 et celui de l'élément piézoélectrique 3 dans le même plan médian au ressort piézoélectrique, transversal, perpendiculaire à l'axe du boîtier et de préférence coïncident.

La poutre 11 présente deux faces parallèles d'appui. L'élément piézoélectrique 3 a la forme d'une plaque évidée et est enserré entre une face plane d'appui de la poutre 11 et la face plane d'une des masses vibrantes 2. Un alésage 12 traverse de part en part la poutre 11 coaxialement à un axe C—C passant par le milieu des faces planes d'appui et orthogonalement à leur surface. L'ensemble est rendu solidaire par l'élément de fixation 4 qui se visse dans un tube d'isolement 13 qui se loge dans l'alésage 12, et qui est taraudé en son milieu afin de recevoir le pied fileté de l'élément de fixation 4.

Selon un autre mode de réalisation représenté à la figure 6, il y a toujours deux masses vibrantes 2, mais cette fois l'élément piézoélectrique n'est plus soumis à des efforts de compression mais de cisaillement. En effet, l'extrémité supérieure de la face plane de chaque masse vibrante 2 est surmontée d'un épaulement tourné vers la poutre 11, tandis que l'extrémité inférieure de chaque face plane d'appui de la poutre 11 présente un épaulement tourné vers la masse vibrante 2 qui lui fait face. La largeur transversale de chaque épaulement appuie sur une épaisseur au plus égale à la moitié de celle que présente l'élément piézo-électrique 3 en direction radiale. Ainsi, celui-ci, qui est en forme de plaque évidée, se trouve soumis à des efforts de cisaillement qui s'exercent entre son bord supérieur en contact avec l'epaulement de la masse vibrante 2 et son bord inférieur en contact avec l'épaulement de la poutre 11, de part et d'autre d'un axe de symétrie B—B parallèle à l'axe du boîtier support et passant par le milieu de l'épaisseur de l'élément piézoélectrique 3. Il y a toujours un tube d'isolement 13, constitué d'une matière isolante thermique et électrique connue ou dans une matière conductrice mais revêtue d'une couche de matériau isolant, logé dans l'alésage 12 de la poutre 11, et dans lequel viennent se visser les éléments de fixation 4. Les éléments de fixation 4 peuvent être une vis dont le corps traverse la première masse vibrante 2, la poutre 11 et la deuxième masse vibrante 2 tandis que son pied fileté se visse dans un écrou logé dans la deuxième masse vibrante 2. Dans ce cas, le tube d'isolement 13 n'est plus taraudé, mais lisse.

## Revendications

1. Dispositif accéléromètre du type masse-ressort comprenant dans un boîtier (1) une masse évidée vibrante (2), équilibrée statiquement et dynamiquement, un ressort constitué par au moins un élément piézoélectrique creux (3) interposé entre la masse (2) et le boîtier (1), ainsi qu'un élément de fixation (4) de ladite masse (2) monté dans le boîtier (1), traversant l'élément piézoélectrique creux (3) et prenant appui sur un épaulement de l'évidement de la masse vibrante (2), caractérisé en ce qu'il comporte, en outre, un élément de précontrainte (5) élastique disposé dans l'évidement de la masse vibrante entre l'épaulement (205) de ladite masse et l'élément de fixation, et que le positionnement de l'élément de précontrainte (5) par rapport à au moins ladite masse est tel que le point d'application de la force de précontrainte et le centre de gravité déterminé par l'équilibrage statique et dynamique de ladite masse vibrante (2) sont situés dans un même plan médian au ressort piézo-électrique, transversal, perpendiculaire à l'axe du boîtier.

2. Dispositif accéléromètre selon la revendication 1, caractérisé en ce que les éléments du ressort piézo-électrique creux (3) sont de form cylindrique et entourent une partie de la masse vibrante évidée, et en ce que la disposition mutuelle de la masse vibrante (2) et des éléments du ressort piézo-électrique (3) est telle que leurs centres de gravité sont dans un même plan médian au ressort piézo-électrique, transversal, perpendiculaire à l'axe du boîtier et en ce que le rayon moyen de l'élément piézo-électrique (3) et le rayon de giration de la masse vibrante équilibrée (2) sont égaux.

3. Dispositif accéléromètre selon la revendication 1, et dans lequel les éléments du ressort piézoélectriques creux (3) sont de forme cylindrique, caractérisé en ce que ces éléments du ressort piézoélectriques (3) entourent au moins partiellement la masse vibrante évidée (2) et que la disposition mutuelle de la masse vibrante et des éléments dudit ressort piézo-électrique est telle que leurs centres de gravité sont dans un même plan médian au ressort piézo-électrique, transversal, perpendiculaire à l'axe du boîtier.

4. Dispositif accéléromètre selon l'une des revendications 1 à 3, caractérisé en ce que la disposition mutuelle de la masse vibrante (2) et des éléments du ressort piézo-électrique (3) est telle que leurs centres de gravité situés dans un même plan transversal, perpendiculaire à l'axe du boîtier coïncident.

5. Dispositif accéléromètre selon l'une des revendications 1 à 4, caractérisé en ce que la masse vibrante (2) comprend, du côté éloigné du boîtier mais tourné vers ce dernier, un épaulement externe, ou interne (203, 206), qui sert de face d'appui sur un élément piézo-électrique (3) appliqué de l'autre côté sur le boîtier.

6. Dispositif accéléromètre selon l'une des revendications 1 à 4, caractérisé en ce que l'une des extrémités (201) de la masse (2) est logée dans un évidement (104) du boîtier situé en-dessous de l'extrémité inférieure (103, 106) des éléments piézo-électriques cylindriques (3).

7. Dispositif accéléromètre selon l'une des revendications 1 à 6, caractérisé en ce que l'une des extrémités (103) d'un élément piézo-électrique (3) prend appui sur le boîtier par l'intermédiaire d'une calotte sphérique (10) qui est évidée pour le passage de l'élément de fixation et, le cas échéant, d'une partie de la masse vibrante, et qui présente une surface sphérique dont le centre est situé sur l'axe commun du boîtier et de l'élément de fixation et qui repose sur une cavité sphérique du boîtier, cavité sphérique dont le diamètre est identique à celui de la calotte sphérique.

8. Dispositif accéléromètre selon l'une des revendications 1 à 7, caractérisé en ce que l'élément de précontraite (5) comporte au moins une extrémité conformée en cavité, ou calotte, sphérique qui coopère avec une calotte, ou cavité, sphérique de même forme et ménagée sur la face d'appui soit de l'épaulement interne de la masse vibrante, soit sur l'épaulement externe de l'élément de fixation, les centres de coubure de cette calotte et de cette cavité sphériques étant situés sur l'axe commun du boîtier et de l'élément de fixation.

9. Dispositif accéléromètre selon l'une des revendications 1 à 8, caractérisé en ce que l'élément de précontrainte (5) est constitué par au moins une rondelle tronconique élastique.

10. Dispositif accéléromètre selon l'une des revendications 1 à 9, caractérisé en ce que l'élément de fixation (4) est constitué par un écrou (402) et une tige filetée (401) qui est soit solidaire du boîtier, soit réalisée d'une seule pièce avec ledit boîtier.

11. Dispositif accéléromètre selon l'une des revendications 1 à 10, caractérisé en ce que l'élément de fixation (4) comprend une partie médiane (403) d'une section transversale inférieure à celle des extrémités et d'une hauteur suffisante pour que sa résistance thermique soit égale à, ou peu différente de, celle de l'ensemble comprenant la masse vibrante et le ou les éléments piézo-électriques et que les matières constituant l'élément de précontrainte, l'élément de fixation ont des coefficients de dilatation qui sont adaptés à ceux du système masse-ressort de façon à obtenir une dilatation différentielle minimale.

12. Dispositif accéléromètre selon l'une des revendications 1 à 11, caractérisé en ce que l'épaulement externe ou interne (203) de la masse vibrante (2) comporte une face d'appui partiel (206) pour une extrémité de l'élément piézo-électrique (3) et que le boîtier (1) comporte une face d'appui partiel (106) pour l'autre extrémité dudit élément piézo-électrique et que les deux faces d'appui partiel sont décalées l'une par rapport à l'autre de telle sorte que la masse vibrante constitue soit l'appui interne, soit l'appui externe, et le boîtier constitue respectivement l'appui externe, ou interne, pour ledit élément piézo-électrique.

13. Dispositif accéléromètre selon l'une des revendications 1 à 12, et comprenant deux masses vibrantes évidées (2) dont les faces planes sont parallèles à l'axe du boîtier qui comporte une partie médiane saillante (11) dite poutre présentant deux faces parallèles d'appui pour la face plane d'un élément piézoélectrique évidé correspondant (3) enserré entre une des faces d'appui de la poutre (11) et la face d'appui d'une des masses vibrantes (2), caractérisé en ce que chacune des deux masses vibrantes (2) présente la forme d'un segment cylindrique qui enveloppe partiellement la poutre (11) et dont la face plane est parallèle à l'axe du boîtier, que chaque élément piézoélectrique (3) est en forme de plaque évidée, que la poutre comporte un alésage (12) perpendiculaire à l'axe et aux faces parallèles d'appui dudit boîtier et que chaque élément piézoélectrique (3) est enserré à l'aide du seul élément de fixation (4) entre la face plane d'une masse vibrante et une des faces d'appui de la poutre.

14. Dispositif accéléromètre selon l'une des revendications 1 à 13, caractérisé en ce que l'extrémité supérieure de la face plane de chaque masse vibrante est surmontée d'un épaulement d'appui tourné vers la poutre du boîtier et que l'extrémité inférieure de chaque face d'appui de la poutre comprend un épaulement d'appui tourné vers la masse vibrante correspondante, que la largeur transversale de ces épaulements d'appui est inférieure, ou au plus égale, à la moitié de l'épaisseur de l'élément piézo-électrique en forme de plaque et que l'un des bords dudit élément piézoélectrique porte contre l'épaulement d'appui de la masse vibrante et l'autre bord opposé porte contre l'épaulement d'appui de la poutre.

15. Dispositif accéléromètre selon l'une des revendications 1 à 14, caractérisé en ce que l'alésage (12) de la poutre est garni d'un tube d'isolement (13) qui traverse aussi avec jeu l'évidement de l'élément piézo-électrique (3) et pénètre partiellement dans l'évidement de la masse vibrante (2).

16. Dispositif accéléromètre selon l'une des revendications 1 à 15, caractérisé en ce que le tube d'isolement (13) est taraudé et le moyen de fixation est constitué par deux vis qui se vissent dans une partie dudit tube.

## Claims

1. Accelerometer device of the spring-mass type comprising, in a housing (1), a hollowed vibrating mass (2), statically and dynamically balanced, a spring constituted by at least one hollow piezoelectric element (3) interposed between the mass (2) and the housing (1) as well as an element (4) for fastening the said mass (2), mounted in the housing (1), traversing the hollow piezoelectric element (3) and abutting against a shoulder of the recess of the vibrating mass (2), characterized in that it comprises an elastic prestressing element (5) situated in the recess of the vibrating mass between the shoulder (205) of the said mass and the fastening element, and in the position of the prestressing element (5) with respect to the said mass is such that the point of application of the prestressing force and the centre of gravity determined by the static and dynamic balancing of the said vibrating mass (2) are situated in the same median plane of the piezoelectric element, which plane is transversal and perpendicular to the axis of the housing.

2. Accelerometer device according to claim 1, characterized in that the elements of the hollow piezoelectric spring (3) are cylinder-shaped and surround part of the hollowed out vibrating mass, and in that the mutual arrangement of the vibrating mass (2) and of the elements of the piezoelectric spring (3) are such that their centres of gravity are in the same median plane of the piezoelectric spring, which plane is transversal and perpendicular to the axis of the housing, and in that the mean radius of the piezoelectric element (3) and the gyrating radius of the balanced vibrating mass (2) are equal.

3. Accelerometer device according to claim 1, and in which the elements of the hollow piezoelectric spring (3) are cylindrical, characterized in that said elements of the piezoelectric spring (3) surround at least partly, the hollowed out vibrating mass, and in that the mutual arrangement of the vibrating mass and of the elements of the said piezoelectric spring is such that their centres of gravity are in the same median plane of the piezoelectric spring, which plane is transversal and perpendicular to the axis of the housing.

4. Accelerometer device according to one of claims 1 to 3, characterized in that the mutual arrangement of the vibrating mass (2) and of the elements of the piezoelectric spring (3) is such that their centres of gravity situated in the same transversal plane, perpendicular to the axis of the housing, are coincident.

5. Accelerometer device according to one of claims 1 to 4, characterized in that the vibrating mass (2) is provided, on its side remote from the housing but facing the latter, with an outer or inner (203, 206) shoulder which serves as a contact face on a piezoelectric element (3) applied on the other side on the said housing.

6. Accelerometer device according to one of claims 1 to 4, characterized in that one of the ends (201) of the vibrating mass (2) is housed in a recess (104) of the housing, situated beneath the lowest end (103, 106) of the cylindrical piezoelectric elements (3).

7. Accelerometer device according to one of claims 1 to 6, characterized in that one of the ends (103) of a piezoelectric element (3) is in resting contact on the housing by way of a spherical ball (10) which is cut to allow the passage of the fastening element, and, if necessary, of part of the vibrating mass, and which presents a spherical surface, the center of which is situated on the joint axis of the housing and of the fastening element, and which rests on a spherical cavity of the housing, the diameter of which spherical cavity is identical to that of the spherical ball.

8. Accelerometer device according to one of claims 1 to 7, characterized in that the prestressing element (5) comprises at least one end shaped as a spherical cavity or ball, cooperating with a spherical ball or cavity of the same shape and provided on the support face either of the inner shoulder of the vibrating mass, or of the outer shoulder of the fastening element, the centres of curvatures of these spherical ball and cavity being situated on the joint axis of the housing and of the fastening element.

9. Accelerometer device according to one of claims 1 to 8, characterized in that the prestressing element (5) is constituted by at least one truncated elastic washer.

10. Accelerometer device according to one of claims 1 to 9, characterized in that the fastening element (4) is constituted by a nut (402) and a threaded rod (401) which is either made fast with the housing, or made in one piece with said housing.

11. Accelerometer device according to one of claims 1 to 10 characterized in that the fastening element (4) is provided with a median part (403) of smaller cross-section than that of the end parts, and of sufficient height for its thermal resistance to be equal to, or little different from that of the assembly consisting of the vibrating mass and, the piezoelectric element or elements, and that the material composing the prestressing element and the fastening member have expansion coefficient adapted to those of the mass-spring system so as to obtain a minimum differential expansion.

12. Accelerometer device according to one of claims 1 to 11, characterized in that the outer or inner (203) shoulder of the vibrating mass (2) comprises a face (206) for partly supporting one end of the piezoelectric element (3) and in that the housing (1) comprises a face (106) for partly supporting the other end of the said piezoelectric element, and in that said two faces are offset with respect to one another so that the vibrating mass constitutes either the inner support of the outer support and the housing constitutes respectively the outer or inner support for the said piezoelectric element.

13. Accelerometer device according to one of claims 1 to 12, and comprising two hollowed-out vibrating masses (2), the plane faces of which are parallel to the axis of the housing, which comprises a projecting middle part (11), so-called girder, provided with two parallel faces supporting the corresponding plane face of a corresponding hollowed-out piezoelectric element (3) clamped between one of the support faces of the girder (11) and the support face of one of the vibrating masses (2), characterized in that each one of the two vibrating masses (2) is shaped as a cylindrical segment which enclose partly the girder (11) and of which the plane face is parallel to the axis of the housing, in that each piezoelectric element (3) is shaped as a grooved plate, in that said girder comprises a bore (12) perpendicular to the axis and to the parallel support faces of the said housing and in that each piezoelectric element (3) is clamped by means of the sole fastening element (4) between the plane face of a vibrating mass and one of the support faces of the girder.

14. Accelerometer device according to one of claims 1 to 13, characterized in that the upper end of the plane face of each vibrating mass is topped with a support shoulder facing the girder of the housing and in that the lower end of each support face of the girder comprises a support shoulder facing the corresponding mass, in that the width across the said supporting shoulders is less or at the most equal to half the thickness of the shoulder of the plate-shaped piezoelectric element, and in that one of the edges of the said piezoelectric element comes into abutment against the support shoulder of the vibrating mass whilst the other opposite edge comes into abutment against the support shoulder of the girder.

15. Accelerometer device according to one of claims 1 to 14, characterized in that the bore (12) of the girder is lined with an insulation tube (13) traversing also and with play the recess of the piezoelectric element (3) and partly penetrating the recess of the vibrating mass (2).

16. Accelerometer device according to one of claims 1 to 15, characterized in that the insulation tube (13) is tapped and the fastening means is constituted by two screws, screwing into part of the said tube.

## Patentansprüche

1. Beschleunigungsmeßeinrichtung des Feder-Masse-Typs mit einer in einem Gehäuse (1) statisch und dynamisch im Gleichgewicht befindlichen, hohlen Schwungmasse, einer durch zumindest ein hohles piezoelektrischen Element (3) gebildeten und zwischen der Masse (2) und dem Gehäuse (1) angeordneten Feder sowie einem Element (4) zur Fixierung der Masse (2), welches im Gehäuse (1) montiert ist, durch das hohle piezoelektrische Element (3) durchgeht und sich auf einer Schulter des Hohlraumes der Schwungmasse (2) abstützt, dadurch gekennzeichnet, daß sie weiters ein in den Hohlraum der Schwungmasse zwischen der Schulter (205) der Masse und dem Fixierelement eingesetztes elastisches Vorspannungselement (5) umfaßt, und daß das Vorspannungselement (5) bezüglich zumindest der Masse derart positioniert ist, daß der Angriffspunkt der Vorspannungskraft und der durch die statische und dynamische Gleichgewichtseinstellung der Schwungmasse (2) festgelegte Schwerpunkt in ein- und derselben transversalen, senkrecht zur Gehäuseachse verlaufenden Mittelebene zur piezoelektrischen Feder liegen.

2. Beschleunigungsmeßeinrichtung nach Anspruch 1, dadurch gekennzeichnet, daß die hohlen piezoelektrischen Federelemente (3) zylindrische Gestalt aufweisen und einen Teil der hohlen Schwungmasse umgeben, und daß die Schwungmasse (2) und die piezoelektrischen Federelemente (3) derart zueinander angeordnet sind, daß ihre Schwerpunkte in ein- und derselben transversalen, senkrecht zur Gehäuseachse verlaufenden Mittelebene zur piezoelektrischen Feder liegen, und daß der mittlere Radius des piezoelektrischen Elements (3) und der Rotationsradius der im Gleichgewicht befindlichen Schwungmasse (2) gleich sind.

3. Beschleunigungsmeßeinrichtung nach Anspruch 1, bei der die hohlen piezoelektrischen Federelemente (3) zylindrische Gestalt aufweisen, dadurch gekennzeichnet, daß die piezoelektrischen Federelemente (3) die hohle Schwungmasse (2) zumindest teilweise umgeben, und daß die Schwungmasse und die piezoelektrischen Federelemente derart zueinander angeordnet sind, daß ihre Schwerpunkte in ein- und derselben transversalen, senkrecht zur Gehäuseachse verlaufenden Mittelebene zur piezoelektrischen Feder liegen.

4. Beschleunigungsmeßeinrichtung nach einem der Ansprüche 1 bis 3, dadurch gekennzeichnet, daß die Schwungmasse (2) und die piezoelektrischen Federelemente (3) derartr zueinander angeordnet sind, daß ihre in ein- und derselben transversalen, senkrecht zur Gehäuseachse verlaufenden Ebene liegenden Schwerpunkte zusammenfallen.

5. Beschleunigungsmeßeinrichtung nach einem der Ansprüche 1 bis 4, dadurch gekennzeichnet, daß die Schwungmasse (2) auf der vom Gehäuse entfernten, aber zu demselben gerichteten Seite eine Außen- oder Innenschulter (203, 206) aufweist, welche als Stützfläche auf einem piezoelektrischen Element (3) dient, das auf der anderen Seite am Gehäuse anliegt.

6. Beschleunigungsmeßeinrichtung nach einem der Ansprüche 1 bis 4, dadurch gekennzeichnet, daß eines der Enden (201) der Masse (2) in einer Ausnehmung (104) des Gehäuses ruht, welches sich unter dem unteren Ende (103, 106) der zylindrischen piezoelektrischen Elemente (3) befindet.

7. Beschleunigungsmeßeinrichtung nach einem der Ansprüche 1 bis 6, dadurch gekennzeichnet, daß sich eines der Enden (103) eines piezoelektrischen Elements (3) mittels einer Kugelkalotte (10) auf dem Gehäuse abstützt, welche Kugelkalotte zwecks Durchtritts des Fixierelements und gegebenenfalls eines Teils der Schwungmasse ausgehöhlt ist und eine kugelförmige Oberfläche aufweist, deren Mittelpunkt auf der gemeinsamen Achse des Gehäuses und des Fixierelements liegt, und die auf einer kugelförmigen Ausnehmung des Gehäuses aufliegt, deren Durchmesser gleich jenem der Kugelkalotte ist.

8. Beschleunigungsmeßeinrichtung nach einem der Ansprüche 1 bis 7, dadurch gekennzeichnet, daß das Vorspannungselement (5) zumindest ein als kugelförmige Ausnehmung oder Kalotte ausgebildetes Ende aufweist, welches mit einer kugelförmigen Kalotte bzw. Ausnehmung derselben Gestalt, die auf der Stützfläche entweder der Innenschulter der Schwungmasse oder auf der Außenschulter des Fixierelements vorgesehen ist, zusammenwirkt, wobei sich die Krümmungsmittelpunkte dieser kugelförmigen Kalotte und Ausnehmung auf der gemeinsamen Achse des Gehäuses und des Fixierelements befinden.

9. Beschleunigungsmeßeinrichtung nach einem der Ansprüche 1 bis 8, dadurch gekennzeichnet, daß das Vorspannungselement (5) durch zumindest eine kegelstumpfförmige Federscheibe gebildet ist.

10. Beschleunigungsmeßeinrichtung nach einem der Ansprüche 1 bis 9, dadurch gekennzeichnet, daß das Fixierelement (4) durch eine Mutter (402) und einen Gewindestift (401) gebildet ist, welcher entweder mit dem Gehäuse verbunden oder einstückig mit diesem ausgebildet ist.

11. Beschleunigungsmeßeinrichtung nach einem der Ansprüche 1 bis 10, dadurch gekennzeichnet, daß das Fixierelement (4) einen Mittelteil (403) aufweist, mit einem Querschnitt, der kleiner als jener der Enden ist, und einer Höhe, die ausreicht, daß sein thermischer Widerstand entweder gleich jenem der Gesamtheit aus Schwungmasse und piezoelektrischem(n) Element(en) oder geringfügig von diesem abweicht, und daß die das Vorspannungselement und das Fixierelement bildenden Materialien Dehnungskoeffizienten aufweisen, die an jene des Feder-Masse-Systems angepaßt sind sodaß eine minimale Differenzdehnung erzielt wird.

12. Beschleunigungsmeßeinrichtung nach einem der Ansprüche 1 bis 11, dadurch gekennzeichnet, daß die Außen- oder Innenschulter (203) der Schwungmasse (2) eine Teilstützfläche (206) für ein Ende des piezoelektrischen Elements (3) unfaßt und das Gehäuse (1) eine Teilstützfläche (106) für das andere Ende des piezoelektrischen Elements umfaßt, und daß die beiden Teilstützflächen derart zueinander abgesetzt sind, daß die Schwungmasse entweder die innere Stütze oder die äußere Stütze bzw. das Gehäuse entweder die äußere oder die innere Stütze für das piezoelektrischen Element darstellt.

13. Beschleunigungsmeßeinrichtung nach einem der Ansprüche 1 bis 12 mit zwei hohlen Schwungmassen (2), deren ebene Flächen parallel sur Achse des Gehäuses verlaufen, welches einen vorspringenden Mittelteil (11), nämlich einen Träger, umfaßt, der zwei parallele Stützflächen für die ebene Fläche eines entsprechenden hohlen piezoelektrischen Elements (3) das zwischen eine der Stützflächen des Trägers (11) und die Stützfläche einer der Schwungmassen (2) eingespannt ist, aufweist, dadurch gekennzeichnet, daß jede der beiden Schwungmassen (2) die Form eines Zylindersegments hat, das den Träger (11) teilweise umgibt und dessen ebene Fläche parallel zur Gehäuseachse verläuft, daß jedes piezoelektrische Element (3) die Gestalt einer hohlen Platte hat, daß der Träger eine senkrecht zur Achse und zu den parallelen Stützflächen des Gehäuses verlaufende Bohrung (12) aufweist, und daß jedes piezoelektrische Element (3) mittels des einzigen Fixierelements (4) zwischen der ebenen Fläche einer Schwungmasse und einer der Stützflächen des Trägers eingespannt ist.

14. Beschleunigungsmeßeinrichtung nach einem der Ansprüche 1 bis 13, dadurch gekennzeichnet, daß das obere Ende der ebenen Fläche jeder Schwungmasse von einer zum Träger des Gehäuses gerichteten Stützschulter überragt wird, und daß das untere Ende jeder Stützfläche des Trägers eine zur entsprechenden Schwungmasse gerichtete Stützschulter aufweist, daß die Querbreite dieser Stützschultern niedriger oder höchstens gleich der Hälfte der Dicke des plattenförmigen piezoelektrischen Elements ist, und daß einer der Ränder des piezoelektrischen Elements auf der Stützschulter der Schwungmasse aufliegt und der gegenüberliegende Rand auf der Stützschulter des Trägers aufliegt.

15. Beschleunigungsmeßeinrichtung nach einem der Ansprüche 1 bis 14, dadurch gekennzeichnet, daß die Bohrung (12) des Trägers mit einem Isolierrohr (13) versehen ist, das auch den Hohlraum des piezoelektrischen Elements (3) mit Spiel durchquert und teilweise in den Hohlraum der Schwungmasse (2) ragt.

16. Beschleunigungsmeßeinrichtung nach einem der Ansprüche 1 bis 15, dadurch gekennzeichnet, daß das Isolierrohr (13) mit Gewinde versehen ist und das Fixiermittel durch zwei in einen Teil des Rohres einzuschraubende Schrauben gebildet ist.

Fig. 1

8   7

202

5

6

102

104

4

203

3

103

2

201

1

105   101

0014656

FIG-2

FIG-3

FIG-4

2

0 014 656

Fig.5

Fig.6

3